# EUROPEAN PATENT APPLICATION

(11) **EP 2 506 126 A1**
(43) Date of publication of application: **03.10.2012**
(21) Application number: 10833096.0
(22) Date of filing: 16.11.2010
(51) Int. Cl.: G06F 3/041

(54) **PORTABLE INFORMATION TERMINAL, INPUT CONTROL METHOD, AND PROGRAM**

(30) Priority: 25.11.2009 JP 2009267777
(71) Applicant: NEC Corporation, Tokyo 108-8001 (JP)
(72) Inventor: ZHOU, Yifeng, Tokyo 108-8001 (JP)
(74) Representative: Vossius & Partner
(86) International application number: PCT/JP2010/070321
(87) International publication number: WO 2011/065249

(57) **Abstract**

A portable information terminal includes display (1) equipped with a touch panel capable of detecting a touch; and controller (2) that executes a process corresponding to a user interface component when a touch to the user interface component displayed on display (1) is detected. When the touch operation to display (1) is a specific touch operation and the user interface component specified by the touch operation is a specific user interface component undetermined as to whether or not to execute the corresponding process, controller (2) does not execute the process corresponding to the specified user interface component.

## Description

### Technical Field

The present invention relates to a portable information terminal comprising a touch panel display capable of detecting a touch.

### Background Art

The portable information terminal represented by a mobile phone, a PDA (Personal Digital Assistant), and an electronic notebook generally has a display for displaying text and an image on a display screen such as a liquid crystal display screen and an input section for inputting a command and data by user operation.

Some portable information terminals use a touch panel in an input section. An information terminal using a touch panel in an input section is disclosed, for example, in JP2009-522669A (hereinafter referred to as Patent Literature 1). The use of a touch panel can increase the ratio of screen size to apparatus size in comparison with a case in which the display is arranged in a place different from that of the input section.

Unfortunately, when a user operates the portable information terminal, the user may accidentally touch the display screen with his/her hand. If a user interface component (UI component) is located in the place touched by the hand, the portable information terminal executes a process corresponding to the UI component. Thus, if the user accidentally touches the display screen, the accidental touch causes the portable information terminal to execute a process unintended by the user.

In order to prevent the portable information terminal that comprises a touch panel input section from executing a process due to an accidental touch, the portable information needs to determine whether an input touch operation is an accidental touch or not and needs to prevent the occurrence of an accidental touch operation. Unfortunately, it is difficult to accurately distinguish between an operation intended by the user and an accidental touch operation.

If an operation intended by the user is incorrectly determined as an accidental touch operation, the operation intended by the user will not be executed, thereby impairing user convenience. If an accidental touch operation is incorrectly determined as the operation intended by the user, a process unintended by the user will be executed, whereby a serious problem may occur.

A technique for preventing an accidental operation by a digital camera comprising a touch panel input apparatus is disclosed in JP2009-86601A (hereinafter referred to as Patent Literature 2). The camera disclosed in Patent Literature 2 changes a region that receives an operation from the touch panel based upon the operation state of the camera such as taking pictures or replaying pictures. Thus, the camera reduces accidental operations unintended by the user for each operation state.

A technique for preventing an accidental operation through the use of an apparatus capable of simultaneously opening a plurality of windows on a display screen is disclosed in JP11-327735A (hereinafter referred to as Patent Literature 3). When windows are displayed overlapping each other, the technique disclosed in Patent Literature 3 disables an input due to a touch to a window other than the topmost window. The reason for this is thought to be that there is a high probability that the operation performed by the user on the topmost window is an operation intend by the user and that there is a low probability that the intended operation will be performed on a window other than the topmost window, thereby reduce the possibility of causing the apparatus to perform an operation unintended by the user due to an accidental operation to a window other than the topmost window.

### Summary of Invention

The technique disclosed in the aforementioned Patent Literature 2 needs to preset a region capable of receiving an operation from the touch panel to each operation state. Unlike a camera whose functions and operation states are limited to some extent, a general-purpose portable information terminal has various applications installed by the user and the display position of a window is changed as needed by the application or user operation, whereby the region receiving an operation cannot be preset.

Further, according to the technique disclosed in the Patent Literature 3, the user cannot perform an input to a window other than a window displayed on top of overlapped windows. The user of a portable information terminal capable of simultaneously running applications may often want to perform an input to a window other than the topmost window according to the application. If a window receiving an operation and a window not receiving an operation are preset, the primary advantage of using a portable information terminal that features a capability of opening multiple windows will be impaired.

As described above, an effective method of taking appropriate action in response to a touch input including an accidental touch has not been established for the general-purpose portable information terminal comprising a touch panel input section.

An exemplary object of the invention is to provide a technique for effectively reducing an effect of an accidental touch on a general-purpose portable information terminal comprising a touch panel display.

A portable information terminal according to an exemplary aspect of the invention includes a display equipped with a touch panel capable of detecting a touch; and a controller that executes a process corresponding to a user interface component when a touch to the user interface component displayed on the display is detected, wherein when the touch operation to the display is a specific touch operation and the user interface component specified by the touch operation is a specific user interface component undetermined as to whether or not to execute the corresponding process, the controller is configured not to execute the process corresponding to the specified user interface component.

Further, an input control method according to an exemplary aspect of the invention is an input control method for a portable information terminal that includes a display equipped with a touch panel capable of detecting a touch, and executes a process corresponding to a user interface component when a touch to the user interface component displayed on the display is detected, wherein when the touch operation to the display is a specific touch operation and the user interface component specified by the touch operation is a specific user interface component undetermined as to whether or not to execute the corresponding process, the process corresponding to the specified user interface component is not executed.

Furthermore, a program according to an exemplary aspect of the invention is a program that causes a portable information terminal to execute a process, the portable information terminal including a display equipped with a touch panel capable of detecting a touch and executing a process corresponding to a user interface component when a touch to the user interface component displayed on the display is detected, wherein when the touch operation to the display is a specific touch operation and the user interface component specified by the touch operation is a specific user interface component undetermined as to whether or not to execute the corresponding process, the program causes the portable information terminal to execute a process of preventing execution of the process corresponding to the specified user interface component.

### Brief Description of Drawings

Fig. 1 illustrates an example of an application running on a portable information terminal.
Fig. 2 is a block diagram illustrating a configuration of a portable information terminal according to a first exemplary embodiment.
Fit. 3 illustrates an example, of a UI component table.
Fig. 4A describes an operation in which the user grasps a portable information terminal with hands, then temporarily releases one hand from the portable information terminal and then re-grasps the portable information terminal.
Fig. 4B describes an operation in which the user grasps a portable information terminal with hands, then temporarily releases one hand from the portable information terminal and then re-grasps the portable information terminal.
Fig. 4C describes an operation in which the user grasps a portable information terminal with hands, then temporarily releases one hand from the portable information terminal and then re-grasps the portable information terminal.
Fig. 5A describes an operation in which the user rotates the portable information terminal.
Fig. 5B describes an operation in which the user rotates the portable information terminal.
Fig. 5C describes an operation in which the user rotates the portable information terminal.
Fig. 5D describes an operation in which the user rotates the portable information terminal.
Fig. 5E describes an operation in which the user rotates the portable information terminal.
Fig. 5F describes an operation in which the user rotates the portable information terminal.
Fig. 6 is a flowchart illustrating a process of controller 2 when a touch operation is inputted.
Fig. 7 is a block diagram illustrating a configuration of a portable information terminal according to a second exemplary embodiment.
Fig. 8A describes an operation of turning the portable information terminal toward a direction perpendicular to a display screen.
Fig. 8B describes an operation of turning the portable information terminal toward a direction perpendicular to the display screen.

### Description of Embodiments

The portable information terminal of the present exemplary embodiment has a touch panel display capable of detecting a touch.

An application running on a portable information terminal has a user interface component (UI component) for providing a necessary function for each application. When the UI component is found in a position of a display that a user accidentally touched, the application including the UI component executes a process corresponding to the UI component. As a result, the portable information terminal executes a process unintended by the user due to an accidental touch to the display by the user. The degree of the effect of an accidental touch when the user uses the portable information terminal depends on the UI component accidentally touched by the user.

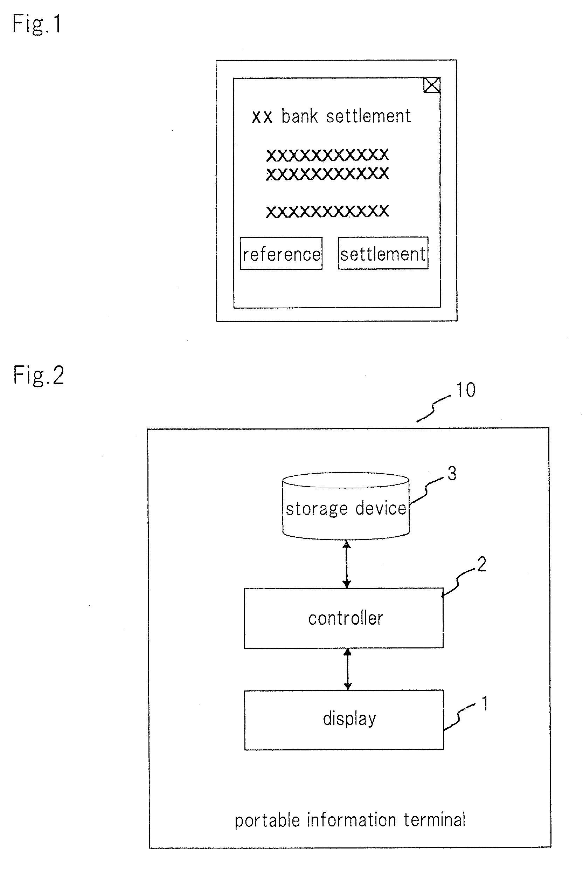

For example, when an application as illustrated in Fig. 1 is running on the portable information terminal, an accidental touch operation to a portion that only displayed character information or that only displayed a reference button for referring to specific information does not cause a serious problem, but an accidental touch operation to a button for terminating the application or a button for implementing the settlement causes a serious problem.

In light of this, the portable information terminal of the present exemplary embodiment has a specific UI component (hereinafter referred to as a specific UI component) which is preset such that the probability is high that an accidental touch operation thereto may cause a serious problem and thus the execution of the corresponding process is limited when the accidental touch operation is performed. Thus, when the portable information terminal detects a touch operation specifying a UI component displayed on the display, the portable information terminal determines whether or not the touch operation is a specific touch (hereinafter referred to as a specific touch operation) in which the probability that this is an accidental touch operation is high. Further, the portable information terminal determines whether or not the specified UI component is a specific UI component.

If the touch operation is a specific touch operation and the UI component specified by the touch operation is a specific UI component, the portable information terminal disables the touch operation and does not execute a process corresponding to the specific UI component. If the touch operation is not a specific touch operation or if the UI component specified by the touch operation is not a specific UI component, the portable information executes a process corresponding to the UI component.

Now, the present invention will be described in detail with reference to the accompanying drawings.

### (First exemplary embodiment)

The present exemplary embodiment describes an example of regarding a touch caused by changing the holding position as a specific touch operation.

The user generally uses the portable information terminal by holding it with his/her hands and thus often changes the position of holding the portable information terminal during use. In general, the user holds the portable information terminal by grasping both end portions of the portable information terminal. In order to change the position of holding the portable information terminal, the user temporarily releases one hand from the portable information terminal and re-grasps any one of the end portions of the portable information terminal.

The size of the portable information terminal that includes a touch panel display has been decreased but the screen size has increased which has resulted in a reduction in the size of the region which lacks a sensor for determining whether a touch operation has taken place. Thus, when the user grasps an end portion of the portable information terminal, the probability is high that the user may accidentally touch an area near the side of the display.

In light of this, the portable information terminal of the present exemplary embodiment determines that a touch that has been made near a side of the display within a certain time after the continuous touch near a side of the display was released is a specific touch operation that was caused by changing the holding position.

Fig. 2 is a block diagram illustrating a configuration of a portable information terminal according to a first exemplary embodiment. As illustrated in Fig. 2, portable information terminal 10 according to the first exemplary embodiment includes display 1, controller 2, and storage device 3.

Display 1 is a display device including a display screen for displaying an image. Display 1 displays the image in response to an instruction from controller 2.

Display 1 further includes a touch panel input function for sensing a touch to a region on the display screen and around the display screen. Display 1 detects a touch from the user and notifies controller 2 of touch information indicating a touch state. The touch information includes information as to whether or not a touch is made, information about the touched coordinates, and information indicating the touch strength.

Controller 2 controls the entire operation of portable information terminal 10. Controller 2 executes each application running on the portable information terminal. Controller 2 causes display 1 to display a screen of the application to be executed and the results of a process executed by the application. Controller 2 is notified of touch information from display 1.

A specific UI component that limits the execution of a process corresponding to a specific touch operation when the specific touch operation is performed is registered as a UI component table into the controller 2. Note that the UI component table is managed not for each application but commonly by the entire system of the portable information terminal.

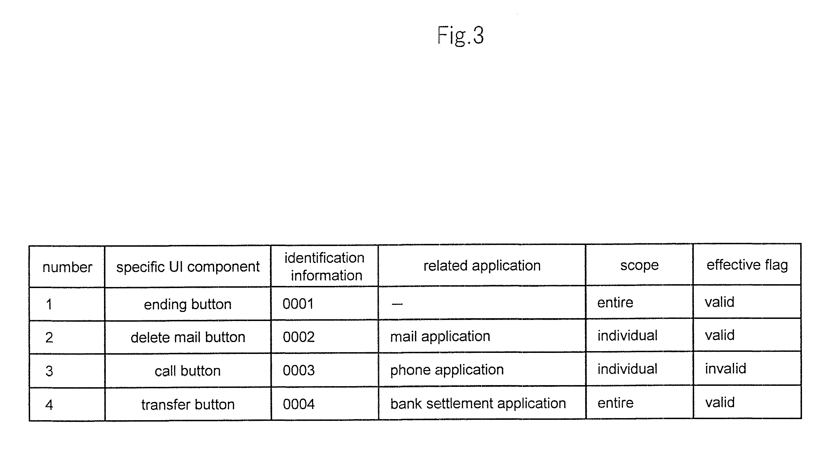

Fig. 3 illustrates an example of the UI component table. As illustrated in Fig. 3, the UI component table manages identification information, a related application, an effective flag, and the scope for each specific UI component.

The identification information in the UI component table specifies information for identifying the specific UI component. As identification information, for example, ID (Identification) information determined in a fixed manner for each UI component may be used, or a relative display position in the application of each UI component may be used.

The related application in the UI component table specifies an application that uses the specific UI component.

The scope in the UI component table specifies a scope for limiting the execution of a process corresponding to each specific UI component. For example, when the scope of a specific UI component is specified as 'individual', controller 2 limits the execution of the corresponding process if a specific touch operation is performed on the specific UI component of the application specified by the related application. When the scope of a specific UI component is specified as 'entire', controller 2 limits the execution of the corresponding process if a specific touch operation is performed on the specific UI components of all the applications on the portable information terminal. Hereinafter, an application for which controller 2 limits the execution of a process corresponding to each specific UI component is referred to as a target application.

For example, in the portable information terminal registered in the UI component table illustrated in Fig. 3, if an accidental touch is made on UI component "call button" which is used by an application other than the phone application, the portable information terminal does not limit the execution of the corresponding process. In other word, "call" is made as an ordinary corresponding process. If an accidental touch is made on UI component "transfer button" which is used by an application other than the bank settlement application, the portable information terminal limits the execution of the corresponding process.

The UI component table further includes an effective flag which specifies whether or not to limit the execution of a process corresponding to a specific UI component if a specific touch operation is performed on the specific UI component. The UI component table is updated at any time by the user. Alternatively, when a new application is installed or executed, controller 2 analyzes the UI layout of the application and automatically stores the UI component of the application in the UI component table.

During execution of an application, controller 2 recognizes the current display position of the UI component displayed by the application. Then, controller 2 compares information about the touched coordinates contained in the touch information received from display 1 with the current display position of the UI component to thereby determine whether or not the inputted touch operation specifies the UI component. If the inputted touch operation specifies the UI component, controller 2 determines whether or not the touch is a specific touch operation in which the probability that this is an accidental touch operation is high. If the inputted touch operation is a specific touch operation, controller 2 determines whether or not the specified UI component is a specific UI component. At this time, controller 2 determines whether or not the UI component that is specified based on the identification information stored in the UI component table, is a specific UI component. If the specified UI component is a specific UI component, controller 2 disables the touch and does not execute the process corresponding to the UI component.

Now, the description will focus on the process when controller 2 determines whether or not the inputted touch operation is a specific touch operation.

Controller 2 of the present exemplary embodiment determines whether or not the inputted touch operation is a specific touch operation based on the determination of whether or not the touch operation is a touch operation caused by changing the holding position.

When a user holds a portable information terminal by his/her hands, the user temporarily releases a hand from the portable information terminal and re-grasps the portable information terminal for ease of holding. At this time, if the hand accidentally touches the display screen, the portable information terminal may execute a process unintended by the user due to the accidental touch.

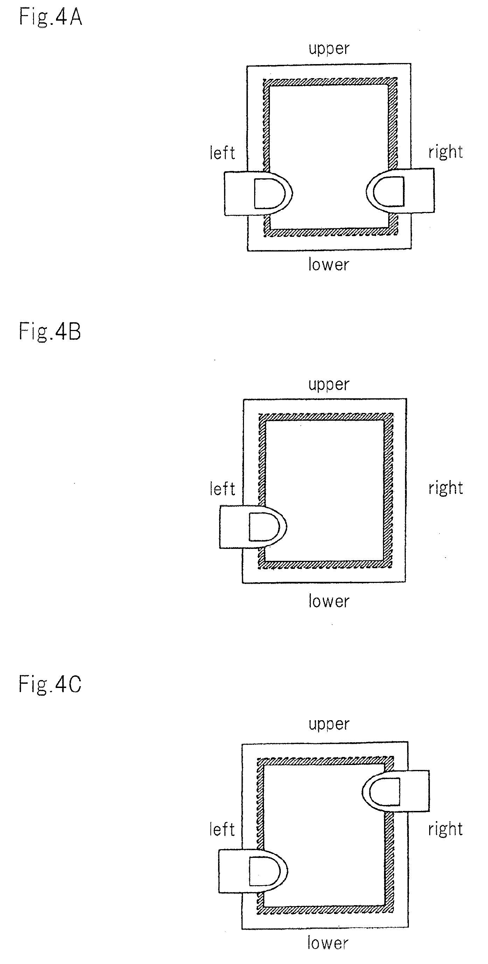

Figs. 4A to 4C each describe an operation in which the user grasps a portable information terminal with his/her hands, then temporarily releases one hand from the portable information terminal, and then re-grasps the portable information terminal.

As illustrated in Fig. 4A, the user first holds the portable information terminal by grasping the left end portion and the right end portion of the portable information terminal. Then, as illustrated in Fig. 4B, in order to change the position of holding the portable information terminal, the user temporarily releases one hand from the right end portion of the portable information terminal. Then, as illustrated in Fig. 4C, the user re-grasps the right end portion of the portable information terminal. Note that when the user temporarily releases one hand from an end portion of the portable information terminal, the end portion re-grasped by a hand is not limited to the end portion grasped by the hand, but may be any end portion.

In light of this, controller 2 determines that a touch that has been made near a side of the display within a certain time after the continuous touch near a side of the display was released is a specific touch operation that was caused by changing the holding position.

In general, the display screen of a portable information terminal including a touch panel is rectangular. Thus, the user may rotate the portable information terminal by 90 degrees to thereby switch the display screen between portrait and landscape. In order to rotate the portable information terminal, the user usually changes the position of holding the portable information terminal.

Unfortunately, when the user rotates the portable information terminal while changing the holding position with his/her hands, a hand of the user may accidentally touch the display screen. When the UI component is found in a position accidentally touched by the hand of the user, the portable information terminal executes a process corresponding to the UI component. As a result, the portable information terminal executes a process unintended by the user due to the accidental touch.

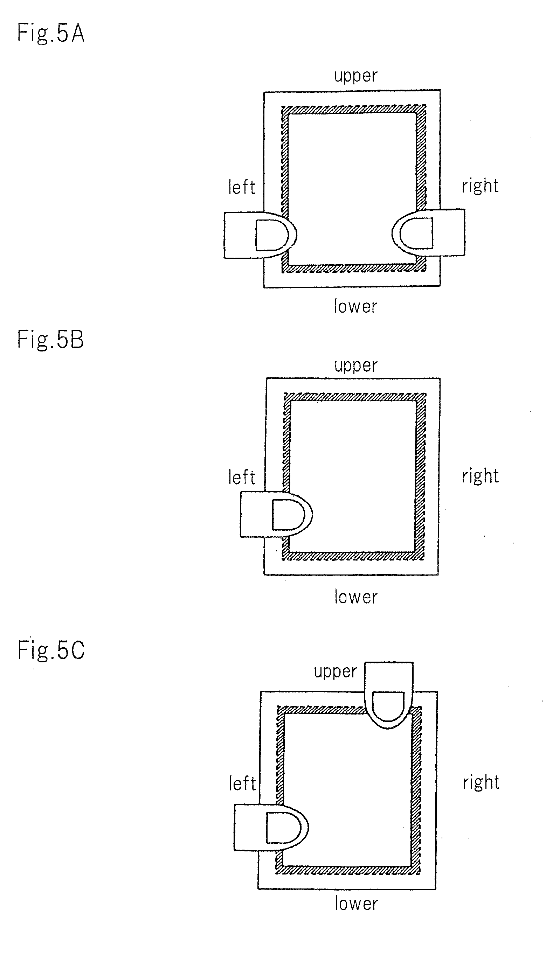

Figs. 5A to 5F each describe an operation in which the user rotates the portable information terminal.

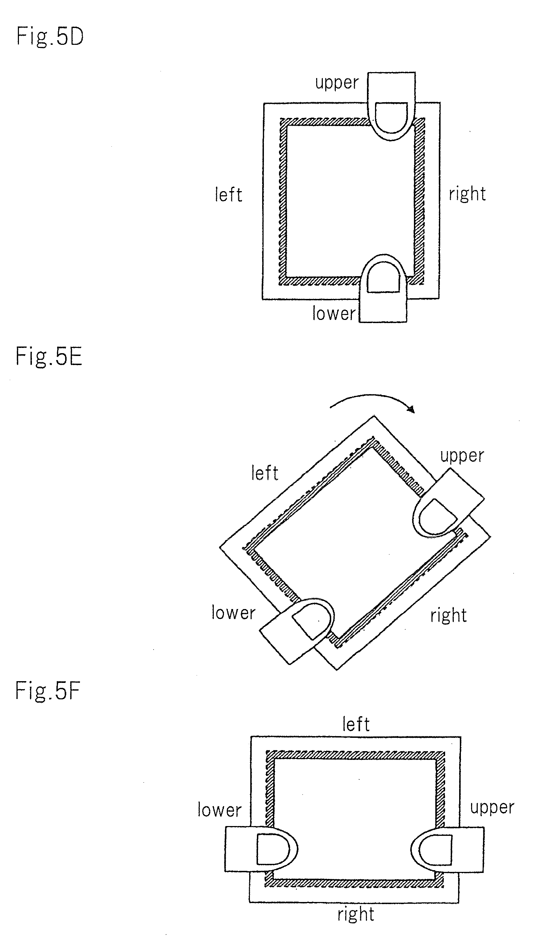

In an example illustrated in Fig. 5A, the user first holds the portable information terminal by grasping a left end portion and a right end portion of the portable information terminal to use the display screen in portrait mode. Then, as illustrated in Fig. 5B, in order to rotate the portable information terminal, the user temporarily releases his/her hand from the right end portion of the portable information terminal. Then, as illustrated in Fig. 5C, the user re-grasps an upper end portion of the portable information terminal. Likewise, as illustrated in Fig. 5D, the user temporarily releases his/her hand from the left end portion of the portable information terminal and re-grasps a lower end portion of the portable information terminal. Then, as illustrated in Fig. 5E, the user rotates the portable information terminal so as to orient the left end portion upward. Then, as illustrated in Fig. 5F, the user terminates the rotation when the portable information terminal is rotated by 90 degrees.

In short, in order to rotate the portable information terminal, the user releases his/her hand from a side of the portable information terminal and re-grasps a side adj acent to the side thereof.

In light of this, controller 2 may determine that a touch that has been made within a certain time after the continuous touch near a side of the display screen was released and that has been made near a side adjacent to a side near the touched portion is a specific touch operation that was caused by changing the holding position.

Note that controller 2 treats both a touch near a side on the display screen and a touch to a region around the display screen as a touch near a side of the display screen.

Storage device 5 is a storage device for storing the UI component table.

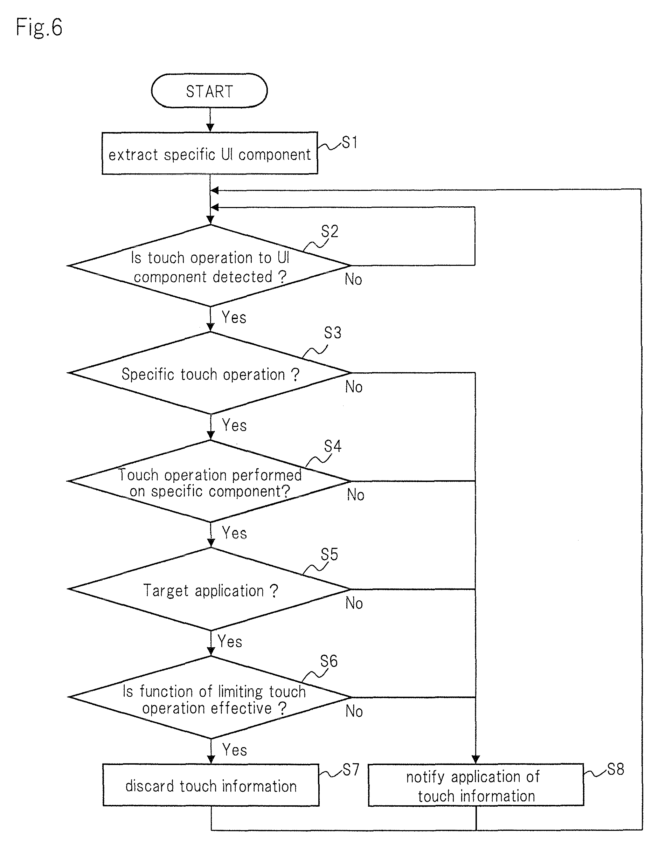

Now, the description will focus on the process of controller 2 when a touch operation is inputted. Fig. 6 is a flowchart illustrating the process of controller 2 when a touch operation is inputted.

First, controller 2 reads the UI component table from storage device 5 and extracts a specific UI component stored therein (Step S1).

Note that in response to a user request to execute an application at any time, controller 2 executes the requested application. During the execution of the application, controller 2 stores the current display position of the UI component displayed by the application.

Subsequently, controller 2 waits until a touch operation is performed on the UI component (Step S2). Note that controller 2 compares information about the touched coordinates contained in the touch information received from display 1 with the current display position of the UI component to thereby determine whether or not the inputted touch operation specifies the UI component.

When the touch information to the UI component is received from display 1, controller 2 determines whether or not the inputted touch operation is a specific touch operation (Step S3).

If the inputted touch operation is determined as a specific touch operation, controller 2 determines whether or not the inputted touch operation is performed on a specific UI component (Step S4). Note that controller 2 determines whether or not the inputted UI component is a specific UI component based on the identification information stored in the UI component table.

If the inputted touch operation is determined to be performed on a specific UI component, controller 2 determines whether or not the application including the specific UI component specified by the inputted touch operation is a target application from the related application and the scope of the specific UI component (Step S5).

If the application including the specific UI component specified by the inputted touch operation is determined as a target application, controller 2 determines whether or not to limit the execution of a process corresponding to the specific UI component from the effective flag of the specific UI component (Step S6).

If the execution of a process corresponding to the specific UI component is limited, controller 2 disables the touch operation and discards the touch information received from display 1 without notifying the target application (Step S7). At this time, controller 2 notifies the user that the inputted touch operation is disabled. The method of notifying the user may be any method. The examples of the method include a display, a warning sound, and vibration by a vibrator indicating that the inputted touch operation is disabled.

Then, controller 2 moves to Step S2, in which controller 2 waits again until touch information is received from display 1.

If the inputted touch operation is not a specific touch operation, if the inputted touch operation is not performed on a specific UI component, if the application including the specific UI component specified by the touch operation is not a target application, or if execution of a process corresponding to the specific UI component specified by the touch operation is not limited, controller 2 notifies the application comprising the UI component specified by the inputted touch operation of the touch information received from display 1 (Step S8). In this case, each application performs a process corresponding to each UI component.

Then, controller 2 moves to Step S2, in which controller 2 waits again until touch information is received from display 1.

Note that controller 2 may periodically perform the extraction of a specific UI component. In this case, controller 2 periodically reads the UI component table from storage device 5 and re-extracts a newly stored specific UI component.

Note that the portable information terminal of the present exemplary embodiment determines whether or not the inputted touch operation is a specific touch operation based on the determination of whether or not the touch operation is a touch operation caused by changing the holding position. Some degree of grasping strength is required to hold the portable information terminal. Thus, the strength of pressing the display screen by the user performing a touch operations to change the position of holding the own terminal is considered to be equal to or greater than a certain amount. In light of this, controller 2 may determine that a touch operation whose strength of pressing the display screen is less than a predetermined strength is not performed to change the position of holding the own terminal.

In this case, controller 2 determines that the touch operation whose strength of pressing the display screen is less than a predetermined strength is not a specific touch operation even if the touch has been made near a side of the display screen within a certain time after the continuous touch near a side of the display screen was released. Further, controller 2 determines that the touch operation whose strength of pressing the display screen is less than a predetermined strength is not a specific touch operation even if the touch has been made within a certain time after the continuous touch near a side of the display screen was released and has been made near a side adjacent to a side near the touched portion. At this time, controller 2 notifies the application including the UI component specified by the inputted touch operation of the touch information received from display 1.

When the portable information terminal is held, the portable information terminal continues to be grasped for a certain period of time or more. Thus, the time during which the touch operation, for changing the position in which its own terminal is held, continuously makes contact with the display screen is considered to be equal to or greater than a certain amount. In light of this, controller 2 may determine that a touch operation, in which the time for remaining in continuous contact with the display screen is less than a predetermined time, has not carried out the task of changing the position in which its own terminal is held.

In this case, controller 2 determines that a touch operation, in which the time for remaining in continuous contact with the display screen is less than a predetermined time, is not a specific touch operation even if the touch has been made near a side of the display screen within a certain time after the continuous touch near a side of the display screen was released. Further, controller 2 determines that a touch operation, in which the time for remaining in continuous contact with the display screen is less than a predetermined time, is not a specific touch operation even if the touch has been made within a certain time after the continuous touch near a side of the display screen was released and has been made near a side adjacent to a side near the touched portion. At this time, controller 2 notifies the application including the UI component specified by the inputted touch operation of the touch information received from display 1.

The present exemplary embodiment has described an example in which the UI component table stores a specific UI component that limits the execution of a corresponding process in response to an accidental touch operation. A UI component shared between applications is used in an end button, a minimize button or a maximize button of the display screen, and the like, but most UI components are different for each application. Thus, it is difficult to share a specific UI component stored in the UI component table with applications. In light of this, a specific UI component may be managed by associating it with character information displayed by the specific UI component, whereby the information stored in the UI component table can be shared between applications.

In this case, the user stores a specific UI component and the character information displayed by the specific UI component in the UI component table by associating them with each other. When a new application is installed or executed, controller 2 analyzes the character information displayed by the specific UI component of the application and stores the UI component and the character information displayed by the specific UI component in the UI component table by associating them with each other. Then, when touch information is received from display 1, controller 2 analyzes the character information displayed by the UI component specified by the touch operation and determines whether or not the character information matches the character information stored in the UI component table to thereby determine whether or not the inputted touch operation is performed on the specific UI component stored in the UI component table.

The portable information terminal of the present exemplary embodiment determines that a touch operation that has been made near a side of the display screen within a certain time after the continuous touch near a side of the display screen was released is a specific touch operation that was caused by changing the holding position. Thus, there is a high probability that even a touch operation that was intended by the user may be judged to be an accidental touch operation and be disabled. In light of this, the display of a specific UI component may be turned off while the execution of a process corresponding to the specific UI component is being limited, such as a certain time after the continuous touch near a side of the display screen was released. Alternatively, the specific UI component may be displayed in an identifiable manner with other components such as a semi-transparent display to thereby draw attention to the user.

The present exemplary embodiment has described an example in which when a touch operation is performed on a UI component, the portable information terminal determines whether or not the touch operation is a specific touch operation and whether or not the UI component receiving the touch operation is a specific UI component. When a touch operation is performed on a UI component, a determination is made as to whether or not the touch operation is a specific touch operation and whether or not the UI component receiving the touch operation is a specific UI component, whichever may be first.

The present exemplary embodiment has described an example in which the display of the portable information terminal has a touch panel input function of sensing a touch to a region on the display screen and around the display screen. The display of the portable information terminal may have any function as long as the function can sense a contact to a region on the display screen and around the display screen. For example, a sensor capable of determining a contact may be stored in a panel of the display.

As described above, according to the present exemplary embodiment, when a touch operation is performed on a UI component, the portable information terminal determines whether or not the touch operation is a specific touch operation in which the probability is high that it was caused by an accidental touch. The portable information terminal further determines whether or not the UI component receiving the touch operation is a specific UI component. Then, if the specific touch operation is performed on a specific UI component, the portable information terminal disables the touch and does not perform the execution of a process corresponding to the specific UI component. According to the portable information terminal of the present exemplary embodiment, the range of limiting the touch operation is determined for each UI component. Thus, the execution of a process that will be greatly affected by an accidental touch can be limited regardless of the running state of the application and the display position of the window. Thereby, a general-purpose portable information terminal can effectively reduce the effect of an accidental touch.

If the touch operation is not a specific touch operation or if the UI component specified by the touch operation is not a specific UI component, the portable information terminal of the present exemplary embodiment executes a process corresponding to the UI component. Thereby, if a usual touch operation is performed and if the effect caused by an accidental touch is small, the portable information terminal can execute a process as usual.

The portable information terminal of the present exemplary embodiment determines that a touch operation caused by changing the holding position is a specific touch operation in which the probability is high that it was caused by an accidental touch. Thereby, the portable information terminal can reduce accidental operations unintended by the user.

The portable information terminal of the present exemplary embodiment determines that a touch that has been made near a side of the display screen within a certain time after the continuous touch near a side of the display screen was released is a specific touch operation that was caused by changing the holding position. Thereby, the portable information terminal can reduce accidental operations caused by an accidental touch occurring when the user re-grasps his/her own terminal.

The portable information terminal of the present exemplary embodiment determines that a touch that has been made within a certain time after the continuous touch near a side of the display screen was released and that has been made near a side adjacent to a side near the touched portion is a specific touch operation that was caused by changing the holding position. Thereby, the portable information terminal can reduce accidental operations caused by an accidental touch that occurs when the user rotates his/her own terminal.

The portable information terminal of the present exemplary embodiment determines that the touch operation in which the strength at which the display screen is pressed is less than a predetermined strength is not a specific touch operation. Thereby, the portable information terminal can more accurately detect a touch operation due to an accidental touch.

The portable information terminal of the present exemplary embodiment determines that the touch operation in which the time for being in continuous contact with the display screen is less than a predetermined amount of time is not a specific touch operation. Thereby, the portable information terminal can more accurately detect a touch operation due to an accidental touch.

The portable information terminal of the present exemplary embodiment manages a specific UI component by associating it with the character information displayed by the specific UI component, and disables a touch operation to the UI component that displays the character information stored if the UI component table. Thereby, the portable information terminal can share the information stored in the UI component table between applications.

Note that the portable information terminal may automatically change the screen display such as the orientation of a character or an image and the layout of a UI component regardless of the user intention. For example, when the portable information terminal is rotated as illustrated in Figs. 5A to 5F, an application is considered to control the up and down direction of the screen display such as the orientation of a character or an image so as to match the up and down direction viewed from the user. Further, when a new application is activated or an activated application performs a process, the screen display is likewise changed or updated. Unfortunately, when the portable information terminal changes the screen display, the position contacted by the user may match the display position of a UI component after change. In this case, the user does not intend to execute a process corresponding to the UI component, but a process unintended by the user is executed as if it was an accidental touch. In light of this, the portable information terminal of the present exemplary embodiment may prevent the execution of a process corresponding to the specific UI component later moved to a position touched by the user.

As an example of the case, controller 2 may determine that a touch to the UI component that occurs due to a change in the screen display is a specific touch operation. As another example of the case, controller 2 may determine that a touch to the UI component that occurs when the screen display is changed is a specific touch operation.

Note that in these cases, controller 2 may extract the specific UI component at the timing when the screen display is changed.

Thereby, even in a case in which the position touched by the user matches the display position of the specific UI component after change due to a change in image display direction and after a change in display content when the application is activated, the portable information terminal can prevent the execution of a process corresponding to the UI component.

### (Second exemplary embodiment)

The first exemplary embodiment has described an example of determining whether or not the inputted touch operation is caused by changing the holding position based on the procedure in which the touch operation is performed. However, the present invention is not limited to this. For example, a determination may be made whether or not the inputted touch operation is caused by changing the holding position based on rotation of the user's terminal. In light of this, the second exemplary embodiment will describe an example of a portable information terminal that determines that a touch operation that has been performed within a certain time after rotation of its own terminal in a direction horizontal to the display screen was detected was caused by changing the holding position.

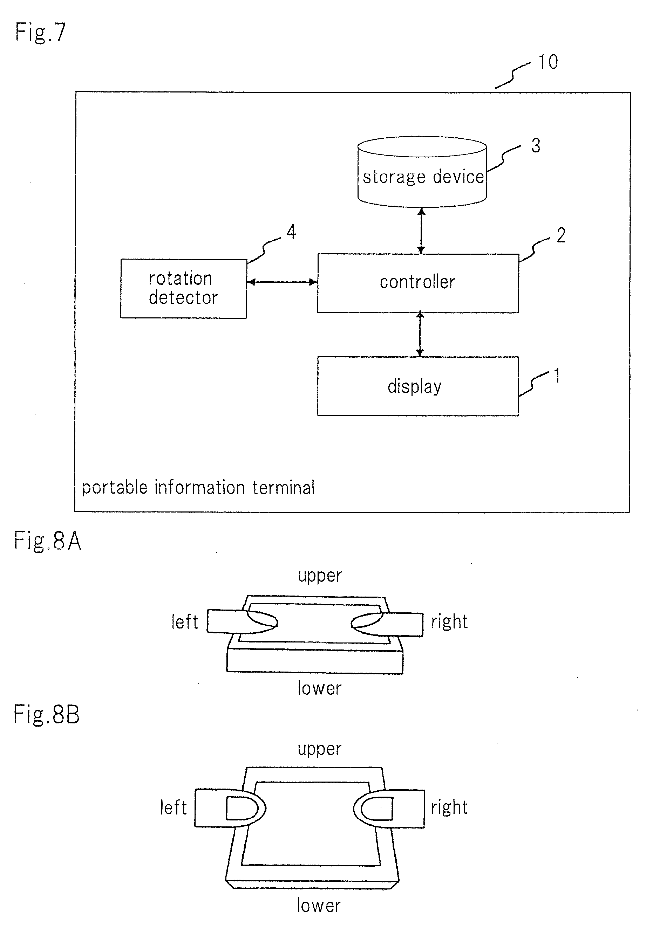

Fig. 7 is a block diagram illustrating a configuration of a portable information terminal according to the second exemplary embodiment.

As illustrated in Fig. 7, portable information terminal 10 according to the second exemplary embodiment has rotation detector 4 added to the configuration of the portable information terminal according to the first exemplary embodiment.

Rotation detector 4 is a sensor such as an acceleration sensor and an angular velocity sensor which detects rotation of its own terminal from the acceleration. Rotation detector 4 generates rotation information indicating the rotation direction and the rotation speed of its own terminal. Further, rotation detector 4 notifies controller 2 of the rotation information in response to a request from controller 2.

Controller 2 of the present exemplary embodiment periodically requests rotation detector 4 for rotation information of its own terminal and receives the rotation information of its own terminal from rotation detector 4. Then, when touch information to a UI component is received, controller 2 determines whether or not the inputted touch operation is caused by changing the holding position based on the rotation information of its own terminal received from rotation detector 4.

When a touch operation is performed on a UI component, controller 2 of the present exemplary embodiment determines whether or not the touch operation has been performed within a certain time after rotation detector 4 detected rotation of its own terminal in a direction horizontal to the display screen.

If a touch operation is performed within a certain time after rotation detector 4 detected rotation of its own terminal in a direction horizontal to the display screen, controller 2 determines that the touch operation is caused by changing the holding position. At this time, controller 2 determines that the touch operation is a specific touch operation. If the touch operation specifies a specific UI component, controller 2 discards the touch information received from display 1 without notifying the target application.

If the inputted touch operation is not performed within a certain time after rotation detector 4 detected rotation of its own terminal in a direction horizontal to the display screen, controller 2 determines that the touch operation is not caused by changing the holding position. At this time, controller 2 determines that the touch operation is not a specific touch operation and notifies the target application of the touch information received from display 1. Then, each application performs a process corresponding to each UI component.

Note that the present exemplary embodiment has described an example in which a determination is made whether or not the inputted touch operation is caused by changing the holding position based on rotation of its own terminal, but the present invention is not limited to this. For example, a determination may be made whether or not the inputted touch operation is caused by changing the holding position based on the shape touched on the touch panel.

When a user touches the touch panel to operate the portable information terminal, the user usually uses the index or middle finger. A touch for holding the portable information terminal is often made by the thumb that contacts the touch panel. Thus, the shape touched by a finger when a touch is made to operate the portable information terminal is generally different from the shape touched by a finger when the portable information terminal is grasped. In light of this, the portable information terminal may preliminarily store a shape touched by a finger of the user when its own terminal is grasped and a comparison may be made between the preliminarily stored shape and a shape of a portion touched on the touch panel, whereby a determination may be made whether or not the inputted touch operation is caused by changing the holding position.

In this case, when a touch operation is performed on a UI component, controller 2 determines whether or not the preliminarily stored shape is similar to the shape of a portion touched on the touch panel by the touch operation.

If the preliminarily stored shape is similar to the shape of a portion touched on the touch panel by the touch operation, controller 2 determines that the touch operation is caused by changing the holding position. At this time, controller 2 determines that the touch operation is a specific touch operation. If the touch operation specifies a specific UI component, controller 2 discards the touch information received from display 1 without notifying the target application.

If the preliminarily stored shape is not similar to the shape of a portion touched on the touch panel by the touch operation, controller 2 determines that the touch operation is not caused by changing the holding position. At this time, controller 2 determines that the touch operation is not a specific touch operation and notifies the target application of the touch information received from display 1. Then, each application performs a process corresponding to each UI component.

Note that the first and second exemplary embodiments have described an example of determining whether or not the inputted touch operation is a specific touch operation based on the determination of whether or not the touch operation is caused by changing the holding position, but the present invention is not limited to this. For example, when a stylus pen is used for inputting, a hand holding the stylus pen may contact the display screen to cause an accidental touch. In light of this, a determination may be made whether or not the inputted touch operation is a specific touch operation based on the determination of whether or not the touch operation is caused by the touch to the display screen by the hand holding the stylus pen.

In this case, the size of the contact to the display screen by the stylus pen is preliminarily stored in the portable information terminal. When a touch is made at a plurality of locations within a predetermined time, controller 2 compares the size of each touch contact to the display screen with the size of the preliminarily stored contact to the display screen by the stylus pen. If a contact having a size similar to that of the preliminarily stored contact to the display screen by the stylus pen is found, controller 2 determines that the touch is caused by the stylus pen and the other touches are caused by contact to the display screen by the hand holding the stylus pen.

In other words, if within a predetermined time before and after a touch having a size similar to that of the contact by the stylus pen is made, a touch operation is performed on other locations different from that of the touch, controller 2 determines that the touch operation is caused by the contact to the display screen by the hand holding the stylus pen. At this time, controller 2 determines that the touch operation is a specific touch operation. If the touch operation specifies a specific UI component, controller 2 disables and discards the touch information due to the contact to the display screen by the hand holding the stylus pen from among the touch information received from display 1.

If a touch operation is performed within a predetermined time before and after a touch having a size similar to that of the contact by the stylus pen is not made, controller 2 determines that the touch operation is not caused by the contact to the display screen by the hand holding the stylus pen. At this time, controller 2 determines that the touch operation is not a specific touch operation and notifies the target application of the touch information received from display 1 as usual.

Alternatively, for example, the portable information terminal may accept from the user a predetermined operation (hereinafter referred to as a disable operation) for disabling a touch operation performed on a specific UI component stored in the UI component table. The portable information terminal determines that a touch operation after a disable operation is performed is a specific touch operation.

In this case, if a touch operation is performed on a UI component, controller 2 determines whether or not the current state is a state in which the user performs a disable operation. If the current state is a state in which a disable operation is performed, controller 2 determines that the touch operation is a specific touch operation. If the touch operation specifies a specific UI component, controller 2 discards the touch information received from display 1 without notifying the target application. If the current state is not a state in which a disable operation is performed, controller 2 determines that the touch operation is not a specific touch operation and notifies the target application of the touch information received from display 1.

The disable operation may be any operation. An example of the disable operation includes an operation of turning the portable information terminal toward a direction perpendicular to the display screen. Figs. 8A and 8B each describe an operation of turning the portable information terminal toward a direction perpendicular to the display screen. In an example illustrated in Fig. 8A, the portable information terminal is first used in a horizontal state. Before a user changes the position at which the portable information terminal is being held, the user tilts the upper portion of the portable information terminal as illustrated in Fig. 8B. When rotation detector 4 detects rotation of the own terminal toward a direction perpendicular to the display screen, controller 2 determines that a disable operation is being performed by the user. At this time, the portable information terminal displays the effect that a disable operation is being performed by the user in order to notify the user.

As described above, according to the present exemplary embodiment, the portable information terminal determines that a touch operation that has been performed within a certain time after rotation of the own terminal toward a direction horizontal to the display screen was detected is caused by changing the holding position. Thereby, the portable information terminal can reduce accidental operations caused by an accidental touch that occurs when the user rotates his/her own terminal.

The portable information terminal of the present exemplary embodiment determines whether or not the inputted touch operation is caused by changing the holding position based on the shape of a portion touched on the touch panel by the touch operation. Thereby, the portable information terminal can more accurately detect an accidental touch that occurs when the user changes the position of holding his/her own terminal.

The portable information terminal of the present exemplary embodiment determines whether or not the inputted touch operation is caused by an accidental touch based on the determination of whether or not the touch operation is caused by contact to the display screen by the hand holding the stylus pen. Thereby, the portable information terminal can reduce accidental operations caused by an accidental touch that occurs when the user uses the stylus pen for inputting.

If within a predetermined time before and after a touch whose size is similar to that of the preliminarily stored contact by the stylus pen is made, a touch operation is performed on the other locations different from that of the touch, the portable information terminal of the present exemplary embodiment determines that the touch operation is a specific touch operation caused by contact to the display screen by the hand holding the stylus pen. Thereby, the portable information terminal can more accurately detect an accidental touch that occurs when the user uses the stylus pen for inputting.

The portable information terminal of the present exemplary embodiment determines that a touch operation after a disable operation for disabling the touch operation is performed is a touch operation in which the probability is high that it is caused by an accidental touch. If the touch operation specifies a specific UI component, the portable information terminal disables the touch operation. Thereby, the user can reliably disable the touch operation performed on the specific UI component before changing the position of holding the own terminal to thereby prevent an accidental operation.

When rotation of the own terminal toward a direction perpendicular to the display screen is detected, the portable information terminal of the present exemplary embodiment determines that a disable operation is performed. Thereby, the user can easily disable the touch operation performed on the specific UI component.

As an example of the advantage of the present invention, a general-purpose portable information terminal comprising the touch panel display can effectively reduce the effect of an accidental touch.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2009-267777 filed on November 25, 2009, the content of which is incorporated by reference.

### Reference Signs List

- 1: Display
- 2: Controller
- 3: Storage device
- 4: Rotation detector

## Claims

1. A portable information terminal comprising: a display equipped with a touch panel capable of detecting a touch; and a controller that executes a process corresponding to a user interface component when a touch to the user interface component displayed on the display is detected, wherein
when a touch operation to the display is a specific touch operation and the user interface component specified by the touch operation is a specific user interface component undetermined as to whether or not to execute the corresponding process, the controller does not execute the process corresponding to the specified user interface component.

2. The portable information terminal according to claim 1, wherein if the touch operation is not the specific touch operation or if the user interface component specified by the touch operation is not the specific user interface component, the controller executes the process corresponding to the specified user interface component.

3. The portable information terminal according to claim 1 or 2, wherein the specific touch operation is a touch to a second predetermined area that has been made within a certain time after a continuous touch to a first predetermined area of the display was released.

4. The portable information terminal according to claim 3, wherein the first predetermined area and the second predetermined area are near a side of the display.

5. The portable information terminal according to claim 3, wherein the first predetermined area is near a side of the display and the second predetermined area is near a side adjacent to the side specified by the first predetermined area.

6. The portable information terminal according to claim 1 or 2, further comprising a rotation detector that detects rotation of its own terminal, wherein
the specific touch operation is a touch that has been made within a certain time after the rotation detector detected the rotation of its own terminal in a direction horizontal to the display.

7. The portable information terminal according to claim 1 or 2, wherein the specific touch operation is a touch including a shape of a portion touched on the display which is similar to a preliminarily stored shape touched by a finger when its own terminal is grasped.

8. The portable information terminal according to claim 1 or 2, wherein the specific touch operation is a predetermined touch operation that may occur when a user changes a position of holding the portable information terminal.

9. The portable information terminal according to any one of claims 1 to 8, wherein the controller does not treat a touch operation in which strength at which the display is pressed is less than a predetermined strength, as the specific touch operation.

10. The portable information terminal according to any one of claims 1 to 9, wherein the controller does not treat a touch operation in which time for continuing to remain in contact with the display screen is less than a predetermined time, as the specific touch operation.

11. The portable information terminal according to claim 1 or 2, wherein the specific touch operation is a touch to the display by a hand holding a stylus pen.

12. The portable information terminal according to claim 11, wherein
the controller preliminarily stores a size of a contact by the stylus pen; and
the specific touch operation is a touch that is made within a predetermined time before and after a touch having a size similar to that of the preliminarily stored contact by the stylus pen is made, in a location different from that of the touch.

13. The portable information terminal according to claim 1 or 2, wherein
a predetermined disable operation for disabling the touch to the specific user interface component is provided; and
the specific touch operation is a touch after the disable operation is performed.

14. The portable information terminal according to claim 13, further comprising a rotation detector that detects rotation of its own terminal; and
the disable operation is an operation of turning the terminal toward a direction that is perpendicular to the display and that is detected by the rotation detector.

15. The portable information terminal according to any one of claims 1 to 14, wherein the controller stores the specific user interface component by associating it with character information displayed by the specific user interface component.

16. An input control method for a portable information terminal comprising a display equipped with a touch panel capable of detecting a touch and executing a process corresponding to a user interface component when a touch to the user interface component displayed on the display is detected, wherein
when a touch operation to the display is a specific touch operation and a user interface component specified by the touch operation is a specific user interface component undetermined as to whether or not to execute the corresponding process or not, the process corresponding to the specified user interface component is not executed.

17. The input control method according to claim 16, wherein if the touch operation is not the specific touch or if the user interface component specified by the touch operation is not the specific user interface component, the process corresponding to the specified user interface component is executed.

18. The input control method according to claim 16 or 17, wherein the specific touch operation is a touch to a second predetermined area that has been made within a certain time after a continuous touch to a first predetermined area of the display was released.

19. The input control method according to claim 18, wherein the first predetermined area and the second predetermined area are near a side of the display.

20. A program that causes a portable information terminal to execute a process, the portable information terminal comprising a display equipped with a touch panel capable of detecting a touch and executing the process corresponding to a user interface component when a touch to the user interface component displayed on the display is detected, wherein
when a touch operation to the display is a specific touch operation and the user interface component specified by the touch operation is a specific user interface component undetermined as to whether or not to execute the corresponding process, the program causes the portable information terminal to execute a process of preventing execution of the process corresponding to the specified user interface component.

21. The program according to claim 20, wherein if the touch operation is not the specific touch or if the user interface component specified by the touch operation is not the specific user interface component, the process corresponding to the specified user interface component is executed.

22. The program according to claim 20 or 21, wherein the specific touch operation is a touch to a second predetermined area that has been made within a certain time after a continuous touch to a first predetermined area of the display was released.

23. The program according to claim 22, wherein the first predetermined area and the second predetermined area are near a side of the display.
